## Europäisches Patentamt

## European Patent Office

## Office européen des brevets

(19)

(11) Veröffentlichungsnummer: **0 045 398**
**B1**

(12) **EUROPÄISCHE PATENTSCHRIFT**

(45) Veröffentlichungstag der Patentschrift:
04.12.85

(51) Int. Cl.⁴: **B 60 P 1/34,** B 60 P 1/64

(21) Anmeldenummer: **81105373.5**

(22) Anmeldetag: **10.07.81**

(54) Kombinierte Wechsel-Kipp-Einrichtung für Nutzfahrzeugaufbauten.

(30) Priorität: **16.07.80 DE 3026978**

(43) Veröffentlichungstag der Anmeldung:
**10.02.82 Patentblatt 82/6**

(45) Bekanntmachung des Hinweises auf die Patenterteilung:
**04.12.85 Patentblatt 85/49**

(84) Benannte Vertragsstaaten:
**AT BE CH FR GB IT LI NL SE**

(56) Entgegenhaltungen:
**AU - B - 4 699 168**
**DE - A - 2 030 616**
**DE - A - 2 149 062**
**DE - B - 2 449 973**
**FR - A - 2 154 896**
**FR - A - 2 368 382**
**US - A - 3 619 007**
**US - A - 4 049 143**

(73) Patentinhaber: **Paul, Josef, Kapuzinerstrasse 80,
D-8358 Vilshofen (DE)**

(72) Erfinder: **Paul, Josef, Kapuzinerstrasse 80,
D-8358 Vilshofen (DE)**

(74) Vertreter: **Wasmeier, Alfons et al, Patent Attorneys A.
Wasmeier H. Graf Postfach 382 Greflingerstrasse 7,
D-8400 Regensburg 1 (DE)**

## Beschreibung

Die Erfindung bezieht sich auf eine Einrichtung zum Wechseln und Kippen von Aufbauten für Nutzfahrzeuge mit einem Trägerrahmen zum Aufnehmen einer Wechselbrücke, mindestens einer zwischen Trägerrahmen und Fahrzeugrahmen angreifenden Hubeinrichtung, einer Strebenführung, die zwischen Trägerrahmen und Fahrzeugrahmen angreifend eingeschaltet ist, und einer Verriegelung zwischen Wechselbrücke und Fahrzeugrahmen.

Es sind Nutzfahrzeuge mit Kippeinrichtung für den Aufbau in verschiedenster Ausgestaltung bekannt und im Einsatz. Des weiteren sind Aufbau-Wechseleinrichtungen für Nutzfahrzeuge in unterschiedlichen Ausführungen bekannt. Darüber hinaus gibt es Absetzkipper und Abrollkipper bzw. Gleitabsetzkipper.

Bei Absetzkippern handelt es sich um Nutzfahrzeuge zum Aufnehmen und Kippen von Containern, die vom Fahrzeugrahmen aufgenommen und die an an Fahrzeuglängsträgern befestigten, nach oben ragenden Tragarmen gekippt bzw. abgesetzt werden. Das Anheben der Container erfolgt mittels an den freien Enden der Tragarme befestigten Ketten. Derartige Nutzfahrzeuge sind nur für den Transport und die Handhabung von Containern bestimmt und geeignet. Ein herkömmlicher Wechselaufbau kann auf derartigen Fahrzeugen nicht eingesetzt werden, da die Breite des Wechselbehälters bzw. Containers kleiner sein muß als der kleinste Abstand zwischen den beiden Tragarmen. Für Wechselaufbauten sind derartige Einrichtungen, die insbes. zum Transport von Müll, Baumaterial und dergl. eingesetzt werden, nicht verwendbar.

Abrollkipper bzw. Gleitabsetzkipper sind Nutzfahrzeuge mit kippbaren Wechselbehältern, die zum Absetzen aus der Kippstellung den schräggestellten Trägerrahmen nach abwärts bewegt bzw. geschoben und mit dem hinteren Teil zuerst auf den Boden aufgesetzt werden. Ein Absetzen des Wechselbehälters unter Beibehaltung der waagerechten Stellung ist hierbei nicht möglich. Das bevorzugte Anwendungsgebiet derartiger Fahrzeuge ist der Transport von Abfallstoffen. Derartige Einrichtungen sind in Verbindung mit Wechselaufbauten nicht einsetzbar, da viele Typen von Wechselaufbauten in Hinblick auf die transportierten Güter beim Absetzen und Aufnehmen waagerecht gehalten werden müssen.

Die DE-A-2 030 616 zeigt ein Lastfahrzeug mit austauschbarem Aufbau, dessen Fahrzeugrahmen einen Trägerrahmen zur Aufnahme der Wechselbrücke gemäß dem Oberbegriff des Anspruchs 1 aufweist. Der Trägerrahmen ist nur an der mittigen, vertikal angeordneten und nicht verschwenkbaren Hubeinrichtung (Druckstempel) befestigt und weist hintere und vordere Kipp- bzw. Kippführungsstützen auf. Der Aufbau ist zusammen mit dem Kipprahmen mittig anhebbar und auf Stützen abstellbar. Die vorderen und die hinteren Stützen sind hierbei nicht miteinander und nicht mit dem Trägerrahmen verbunden, so daß eine einwandfreie Zwangsführung beim Heben und beim Kippen nicht gewährleistet ist.

Aufgabe der Erfindung ist es, eine Einrichtung zu schaffen, mit deren Hilfe es auf einfache, zweckmäßige und billige Weise möglich ist, eine Aufbau-Wechseleinrichtung mit einer Kippeinrichtung zu kombinieren und damit ein Nutzfahrzeug zu schaffen, bei dem unterschiedliche Typen von Aufbauten gegeneinander austauschbar sind, bei dem die Wechselbrücke nach hinten kippbar ist (»vorne« und »hinten« beziehen sich hierbei auf Fahrerhaus und Wechselaufbau und können ggfs. vertauscht werden), bei dem die Wechselaufbauten stufenlos auf Zwischenhöhen einstellbar bzw. anhebbar sind, bei dem ein waagerechtes Absetzen der Wechselaufbauten gewährleistet ist und bei dem die volle Fahrzeugbreite (Euromaß) genutzt werden kann.

Gemäß der Erfindung wird bei einer Einrichtung der gattungsgemäßen Art vorgeschlagen, daß Vorderstrebe und Hinterstrebe der Strebenführung jeweils gelenkig am Trägerrahmen und am Fahrzeugrahmen befestigt sind, derart, daß die Strebenführung mit dem Trägerrahmen und der Wechselbrücke beim Anheben bzw. Absenken der Wechselbrücke parallelogrammartig geführt ist bzw. ihre parallele Lage zum Fahrzeugrahmen beibehält, und daß zum Kippen des Wechselaubaues die Hinterstrebe in einer Ebene mit dem Trägerrahmen so festlegbar ist, daß Trägerrahmen und Hinterstrebe zu einem starren Träger verbunden sind, und ein Anlenkpunkt der Vorderstrebe vom Trägerrahmen bzw. vom Fahrzeugrahmen lösbar ausgebildet ist, derart, daß der Trägerrahmen mit der Wechselbrücke um eine hintere Kipplagerung schwenkbar ist.

Weitere Merkmale der Erfindung sind Gegenstand der Unteransprüche.

Mit der erfindungsgemäßen Einrichtung können Aufbauten unterschiedlicher Art — gewerbliche Aufbauten verschiedenster Art, Aufbauten für den Freizeitbereich usw. — ausgetauscht werden und die Wechselbrücke kann genau auf die jeweilige benötigte Höhe angehoben werden, um z. B. unterschiedliche Laderampenhöhen auszugleichen. Bei derartigen Wechselaufbauten ist zum rationellen Entladen ein Kippen der Brücke nach hinten möglich. Des weiteren läßt sich durch den Einsatz waagerecht liegender Heberäder bzw. ggfs. bei gänglichem Wegfall der Heberäder (bei Einsatz eines Gleitrahmens) eine sehr niedrige Brückenbauhöhe, bzw. eine individuelle Gestaltung der Bauhöhe des Aufbaues erreichen. Da die zulässige Gesamthöhe des Fahrzeuges sich aus Brückenbauhöhe und Höhe des Aufbaus zusammensetzt, kann die Nutzhöhe des Aufbaues um so größer sein, je geringer die Brückenbauhöhe ist. Die mit der Erfindung erzielbaren Vorteile sind ferner u. a., daß die Fahrzeugstandzeiten wesentlich verringert werden können, was eine erhöhte Transportleistung je Fahrzeug und einen optimalen Einsatz von Fahrzeug und Personal ergibt, daß der Fahrzeugeinsatz mobil gehalten werden kann, wobei Aufbau und Fahrgestell getrennt nutzbar sind, und daß Spezialaufbauten wirtschaftlich eingesetzt werden können.

Eine derartige Wechsel-Kipp-Einrichtung bietet sich insbesondere für Gewerbebetriebe aller Art, wie z. B. die Landwirtschaft, Gärtnereien und Kommunalbetriebe, für Montagetrupps, als Bau- und Bürowagen, für Handelsunternehmungen und Speditionen, z. B. Möbel- und Kühltransporte, mobile Verkaufsstände, für die Getränkeindustrie, für Entsorgungsbetriebe zum Transport beliebiger kippfähiger Güter, für Autovermietungen, Autowerkstätten, Abschleppdienste und für Freizeitaufbauten, z. B. Wohnmobile, Transport von Booten, Reitpferden usw. an.

Die Arbeitsweise der Wechsel-Kipp-Einrichtung nach der Erfindung ist wie folgt: Für den Wechselvorgang werden zum Absetzen vier selbstspannende Verriegelungen geöffnet, es wird ein Schalter im Fahrerhaus auf »Heben« betätigt, wodurch ein elektrohydraulisches Anheben des Wechselaufbaues erreicht wird; anschließend werden die vorderen Stützen ausgeklappt und gesichert, die Stützbeinverlängerungen abgelassen, der Schalter im Fahrerhaus wird auf »Senken« betätigt, bis der Aufbau auf Stützen abgestellt ist, und schließlich wird das Fahrgestell herausgefahren. Beim Aufnehmen wird in umgekehrter Reihenfolge wie beim Absetzen verfahren. Zur Durchführung des Kippvorganges werden die vorderen Verriegelungen geöffnet und der Schalter im Fahrerhaus wird auf »Heben« betätigt, so daß der Aufbau elektrohydraulisch nach hinten gekippt wird. Das Ablassen erfolgt durch Betätigen des Schalters auf »Senken« und Schließen der Verriegelungen.

Zum Anheben auf individuelle Ladehöhe werden die vier Verriegelungen geöffnet, es wird der Schalter auf »Heben« betätigt, wodurch der Wechselaufbau auf die individuelle Höhe elektrohydraulisch angehoben wird, und nach erfolgtem Ladevorgang wird der Wechselaufbau abgesenkt und verriegelt.

Nachstehend wird die Erfindung in Verbindung mit der Zeichnung anhand eines Ausführungsbeispiels erläutert. Es zeigt

Fig. 1 eine Seitenansicht eines Nutzfahrzeuges mit dem erfindungsgemäßen Wechsel-Kippsystem in einer Betriebsstellung, in der der Wechselaufbau aufgenommen werden kann,

Fig. 2 den abgestellten Wechselaufbau, der von dem Fahrzeug nach Fig. 1 zum Aufsetzen unterfahren wird,

Fig. 3 die Darstellung des Nutzfahrzeuges nach Fig. 1 in einer Betriebsstellung, in der der Wechselaufbau auf das Nutzfahrzeug aufgesetzt ist und den betriebsbereiten Zustand einnimmt,

Fig. 4 das Fahrzeug nach Fig. 3 in einer weiteren Betriebsstellung, in der der Aufbau gekippt ist,

Fig. 5a, b, c eine Prinzipskizze der Wirkungsweise der erfindungsgemäßen Einrichtung in drei verschiedenen Betriebspositionen,

Fig. 6 eine Prinzipskizze einer anderen Ausführungsform der Erfindung und

Fig. 7 eine Prinzipskizze einer weiteren Ausführungsform der Erfindung.

Das Basisfahrzeug 1 ist mit Fahrerhaus 2, Fahrzeuglängsträger 3 des Fahrzeugrahmens 4 und Hinterrad 5 schematisch dargestellt. Ein Fahrzeughilfsrahmen 6 mit Längsträgern 7 und Querträger 8 ist am Fahrzeugrahmen 4 befestigt und dient zur Aufnahme von zur Lagerung und Betätigung der Wechselbrücke 9 erforderlichen Elementen, die nachstehend erläutert werden. Ein Trägerrahmen 10 mit Hauptträger 11, der einen vorderen Anschlag 12 aufweist, ist über Vorderstreben 13 und Hinterstreben 14 parallelogrammartig mit dem Fahrzeugrahmen 4 befestigt und wird mit Hilfe einer Hubvorrichtung bzw. eines Hydraulik-Teleskop-Zylinders 15 angehoben und abgesenkt. Der Hydraulikzylinder 15 ist vom Fahrerhaus 2 aus durch elektrische oder manuelle Steuerung einer Hydraulikpumpe 16 betätigbar. Der Trägerrahmen 10 nimmt eine vordere Radhalterung 17 mit zwei Hebe- und Führungsrädern 18 sowie eine hintere Radhalterung 19 mit zwei Hebe- und Führungsrädern 20 auf. Die Heberäder sind horizontalliegend angeordnet und laufen in Führungsprofilen 21 (U-Profilen) der Wechselbrücke 9; sie ergeben eine Verringerung der Brückenbauhöhe.

Der Hydraulikzylinder 15 ist bei 22 gelenkig mit dem Trägerrahmen 10 auf jeder Seite des Fahrzeuges oder in der Mitte befestigt, sein entgegengesetztes Ende ist gelenkig am Rahmenquerträger 8 in der Verbindungsplatte 24 zum Fahrzeugrahmen 4 festgelegt. Der Hydraulikzylinder 15 ist zum Anheben der Wechselbrücke 9 ausfahrbar. Jede der beiden Vorderstreben 13 ist mit ihrem oberen Ende am Anlenkpunkt 25 und mit dem entgegengesetzten Ende bei 26 an der Verbindungsplatte 24 befestigt. Die Strebe 13 stellt eine Hebelverbindung dar und ist bei der dargestellten Ausführungsform mit Hilfe einer Feder 27 bei gekipptem Wechselaufbau im angehobenen Zustand gehalten, damit ein Eingriff zwischen dem oberen Ende der Strebe 13 und einem mit dem Trägerrahmen 10 befestigten Sperrglied 28 am Trägerrahmen beim Absenken des Wechselaufbaues gewährleistet ist. Das Sperrglied 28 kann jedoch auch in Form einer Verriegelung ausgebildet sein, in die das obere Ende der Strebe 13 einrastet bzw. von der das obere Ende der Strebe freigegeben werden kann, damit die Strebe 13 vom Trägerrahmen 10 gelöst wird. Das Lösen und Verriegeln kann dabei mechanisch oder hydraulisch erfolgen. Die Hinterstrebe 14 ist mit einem oberen Anlenkpunkt 29 am Trägerrahmen 10 und mit ihrem unteren Ende in einer Gelenklagerung 30 (Kipplagerung) befestigt und hat in der dargestellten Ausführungsform L-Form (analog der Strebe 13).

Die Wechselbrücke 9 besitzt vordere Stützbeine 31 und hintere Stützbeine 32; die vorderen Stützbeine 31 sind bei der dargestellten Ausführungsform einklappbar, während die hinteren Stützbeine starr ausgebildet sind und hochgezogen werden. Am Längsträger 33 ist jeweils eine Wechselbrücken-Einführung 34 vorgesehen, die beim Aufsetzen der Wechselbrücke auf das Fahrzeug in Eingriff mit der Heck-Kipplagerung 30 kommt. Eine seitliche Wechselbrücken-Einführung 35 ist am vorderen Ende des Längsträgers 33 beidseitig befestigt und kommt beim Aufsetzen der Wechselbrücke in Eingriff mit vorderen Verriegelungen 36, die beim Kippen der Wechselbrücke gelöst werden, während die hinteren Verriegelungen in Eingriff bleiben. Im Fahrzustand sind sowohl die vorderen als auch die hinteren Verriegelungen geschlossen.

Die Wechselbrücke 9 ist an vier Stellen mit dem Hilfsrahmen 6 des Fahrzeuges verbunden. Diese Verbindungsstellen bestehen aus den vorderen Verriegelungen 36 (links und rechts) sowie den hinteren Kipplagern 30 (links und rechts) am Fahrzeugheck. Werden die Kipplager geöffnet, liegt die Wechselbrücke 9 lose auf dem Fahrzeughilfsrahmen 6 auf und kann mit Hilfe des Hydraulikzylinders 15 angehoben werden, der über die Hydaulikpumpe 16 elektrisch oder mechanisch vom Fahrerhaus aus betätigbar ist. Um ein waagerechtes Anheben der Wechselbrücke 9 zu gewährleisten, greift der Hydraulikzylinder 15 am Trägerrahmen 10 an, der durch die vorderen Streben 13 und die hinteren Streben 14 in einem Parallelogramm-Gelenksystem gelagert ist. Beim Anheben der Wechselbrücke wird durch ein (nicht dargestelltes) Umschaltventil die Vorderstrebe 13 mittels eines Sperrzylinders mit dem Trägerrahmen 10 am Anlenkpunkt 25 verriegelt.

Beim Ausfahren des Hydraulikzylinders 15 bewegt sich der Hauptträger 11 des Trägerrahmens 10 in einem Teilkreisbogen nach oben. Über die auf die vordere Radhalterung 17 und die hintere Radhalterung 19 montierten, waagerecht liegenden Räder 18, 20, die am Hauptträger 11 des Trägerrahmens 10 befestigt sind, wird gleichzeitig die Wechselbrücke 9 angehoben. Die Räder greifen dabei in die Längsträger 33 der Wechselbrücke 9 ein, die U-förmig ausgebildet sind, so daß durch Eingriff der Räder ein Kippen in jeder Richtung verhindert wird. Durch Absperren des Hydraulikkreislaufes läßt sich die Wechselbrücke in jeder beliebigen Höhe feststellen, soweit es der nutzbare Weg der Streben 13 und 14 zuläßt. Die Wechselbrücke 9 ist nach vorne durch den Anschlag 12 am Trägerrahmen 10 und nach rückwärts durch eine flachliegende Blattfeder 37 mit Nocke 38 gegen Abgleiten gesichert.

Das Wechseln einer Ladebrücke 9 beginnt mit der gleichen Arbeitsfolge wie das Anheben der Wechselbrücke auf individuelle Ladehöhe. Ist die Wechselbrücke 9 auf eine zum Herausfahren des Fahrgestells notwendige Höhe angehoben, werden die Stützbeine 31 und 32 der Wechselbrücke 9 ausgeklappt. Dies geschieht durch Lösen der Stützbeinverriegelung vorne links und rechts, durch Schwenken der vorderen Stützbeine 31 in die senkrechte Position und durch Ausziehen der Stützbeinverlängerungen (oder in sonstiger, bei auf Stützbeinen stehenden Ladebrücken üblichen Weise). Der Hydraulikkreislauf wird geöffnet, bis die Wechselbrücke 9 auf ihre vier Stützbeine abgestützt ist. Nunmehr kann das Fahrgestell unter der Wechselbrücke 9 herausgefahren werden. Das Aufsetzen der Wechselbrücke geschieht in umgekehrter Reihenfolge, d. h. durch hydraulisches Anheben des Trägerrahmens 10 auf eine Höhe, in der die vier waagerecht liegenden Räder 18 und 20 die Höhe des Wechselbrückenlängsträgers 33 erreicht haben. Das Einfahren des Fahrgestells bzw. das Einführen der waagerecht liegenden Räder in die Längsträger kann nun problemlos vorgenommen werden. Eventuelle Höhenkorrekturen lassen sich über die Hydraulik vornehmen. Das Fahrgestell wird bis zum Anschlag im Trägerrahmen 10 eingefahren, der Trägerrahmen 10 wird hydraulisch angehoben, die Stützbeine werden eingeklappt und die Wechselbrücke wird zum Aufliegen auf dem Fahrzeughilfsrahmen 6 abgesenkt. Zur Sicherung während der Fahrt werden die Kipplagerungen 30 und 36 verriegelt.

Zum Kippen der Wechselbrücke 9 werden vor Einleitung des Kippvorganges die vorderen Kipplager 36 entriegelt, während die Kipplagerung 30 am Heck geschlossen bleibt. Der Hydraulikkreislauf wird auf »Kippen« geschaltet. Bei der Betätigung der Hydraulikpumpe 16 wird über den Hydraulikzylinder 15 der Trägerrahmen 10 und damit über die Räder 18, 20 die Wechselbrücke 9 nach hinten abgekippt. Die Vorderstrebe 13 ist jetzt hydraulisch nicht mit dem Trägerrahmen 10 verriegelt, löst sich während des Kippvorganges und bleibt gelöst, bis ein Wiedereingriff der Verriegelung vorgenommen wird. Die Wechselbrücke 9 kann bis zu einem Kippwinkel von 40° stufenlos gekippt werden. Durch Öffnen des Hydraulikkreislaufes senkt sich die Wechselbrücke wieder ab. Die Vorderstrebe 13 wird wieder selbsttätig in den Trägerrahmen 10 eingeführt und in ihre Ausgangslage gedrückt. Die Verriegelung bei 25 ist beispielsweise in Form eines Sperrzylinders ausgebildet, der mechanisch oder hydraulisch betätigt wird und die Verriegelung herstellt oder löst.

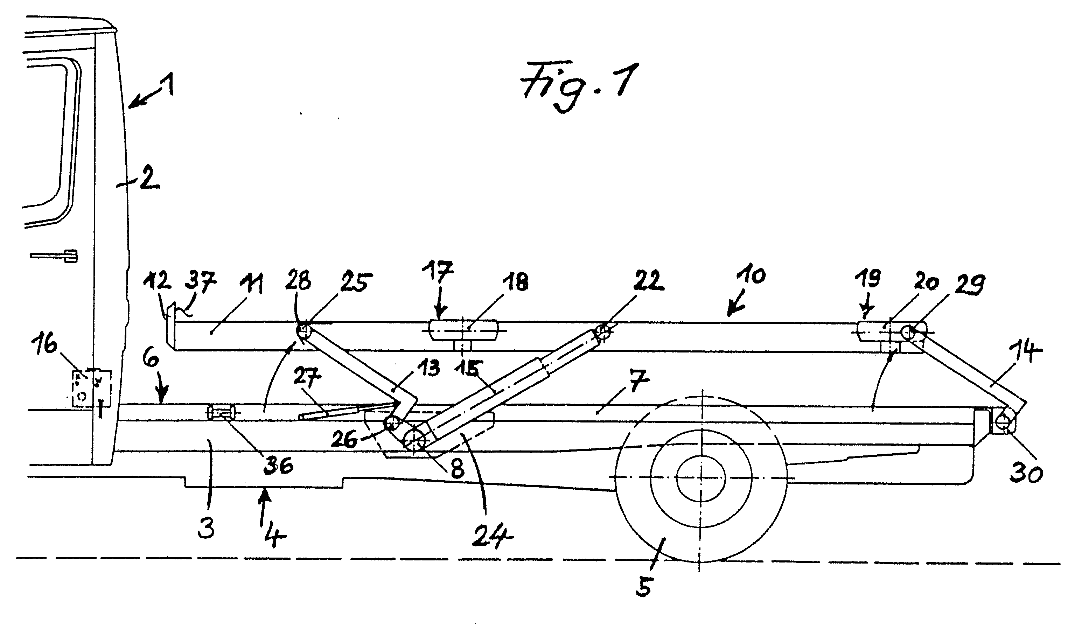

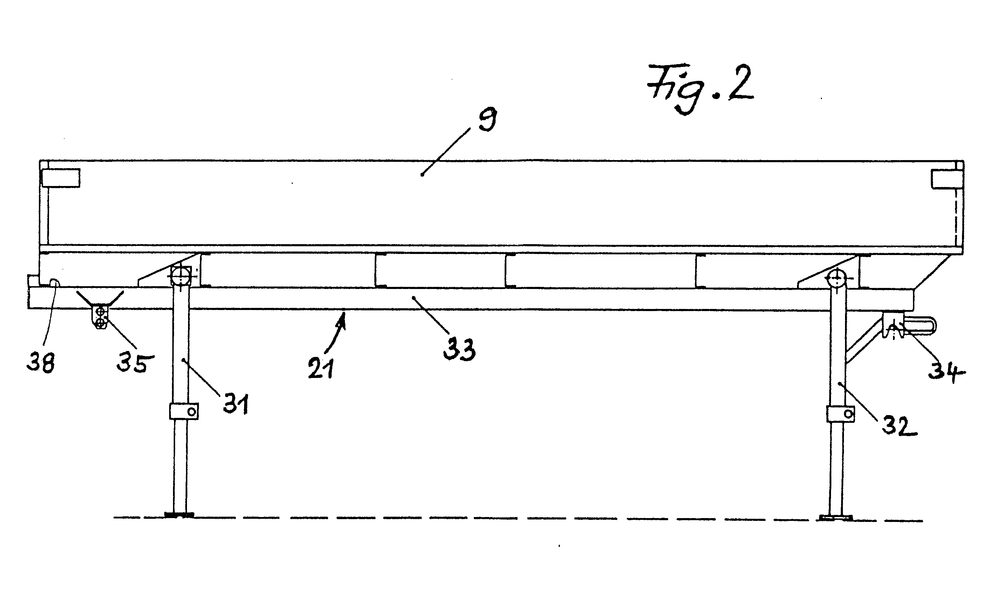

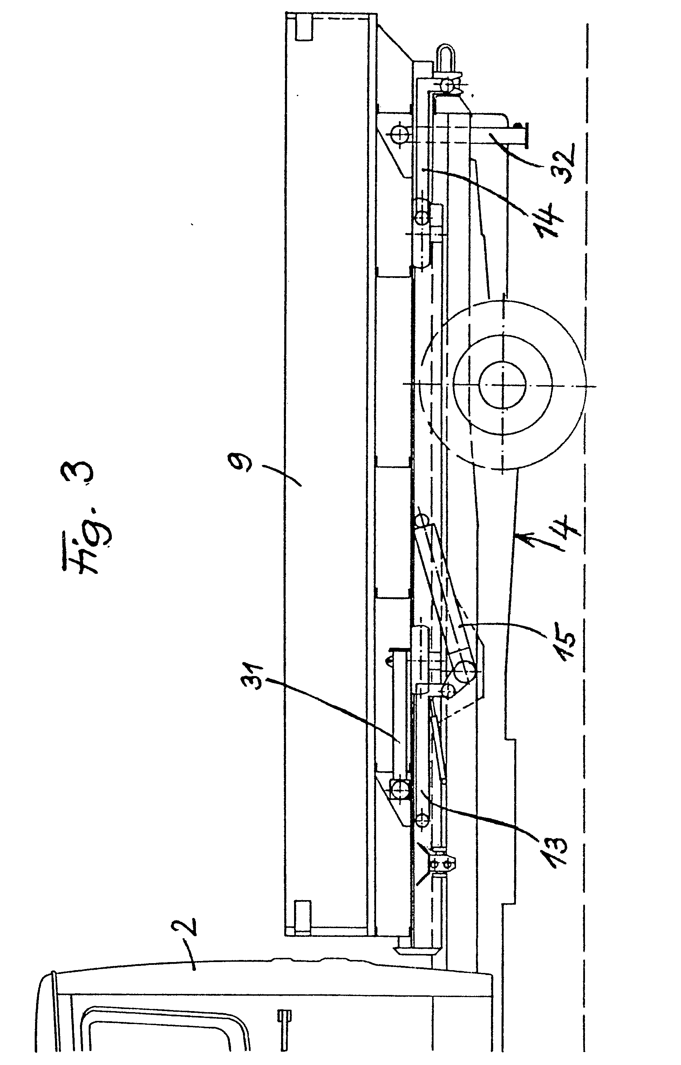

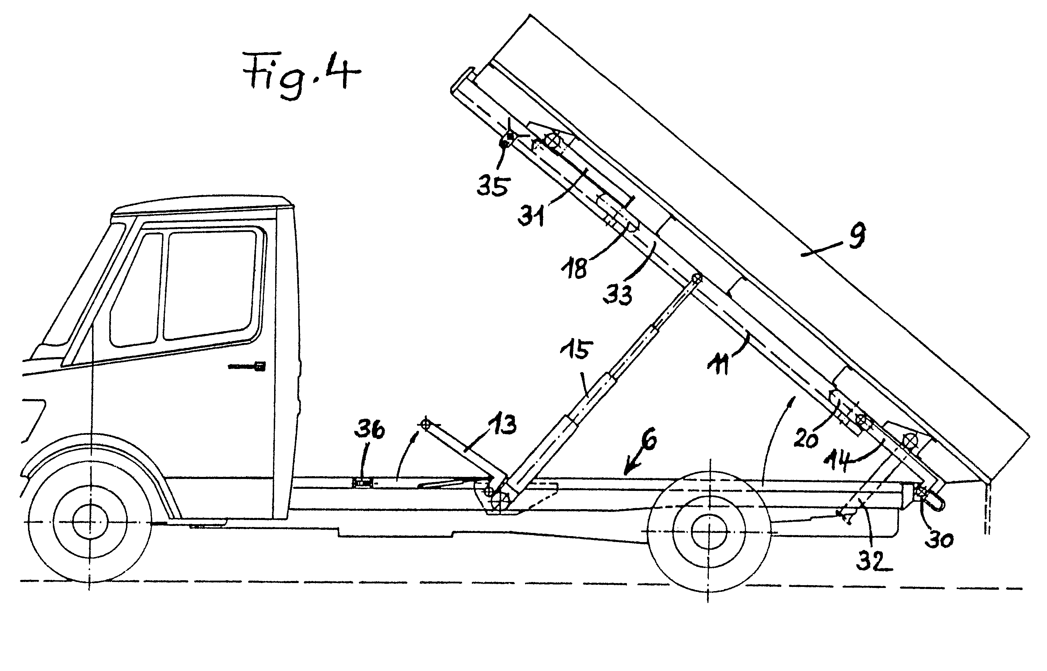

Bei der speziellen Ausführungsform der Erfindung, die in den Fig. 1 bis 4 dargestellt ist, fällt die Schwenkachse, um die die Hinterstrebe 14 schwenkbar am Fahrzeugrahmen gelagert ist, mit der Kippachse des Gesamtaufbaues zusammen. Die Erfindung ist jedoch nicht auf diese Ausführung beschränkt. Beide Achsen können auch getrennt voneinander und im Abstand zueinander versetzt ausgebildet sein, wobei bei parallelen, im Abstand angeordneten Schwenkachsen die Hinterstrebe teleskopartig ausgebildet wird, damit eine Anpassung an die Abstandsdifferenz vorgenommen werden kann.

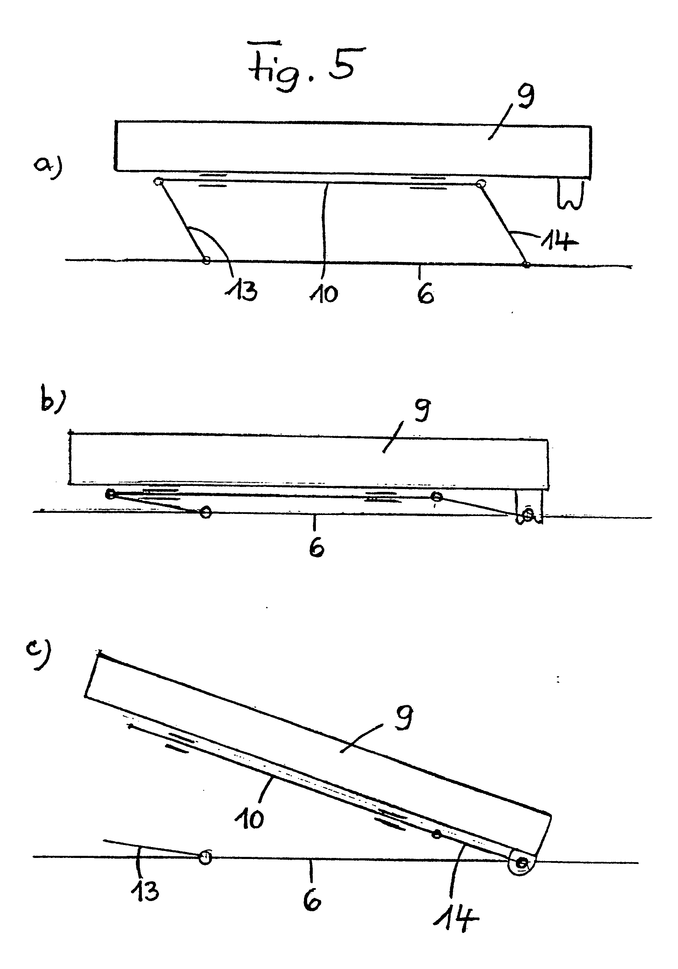

Die Fig. 5, 6 und 7 zeigen jeweils eine Prinzipdarstellung einer unterschiedlichen Ausführungsform der Erfindung. In Fig. 5 ist im Prinzip die Ausführungsform nach den Fig. 1 bis 4 in drei unterschiedlichen Betriebspositionen dargestellt, um die grundlegende Arbeitsweise der Erfindung zu veranschaulichen. Auf den Fahrzeugrahmen 6 ist die Wechselbrücke 9 über eine Parallelogrammführung 6-10-13-14 waagerecht aufgenommen und unter Beibehaltung der waagerechten Position heb- und senkbar. Die Streben 13 und 14 sind sowohl am Fahrzeugrahmen 6 als am Trägerrahmen 10 zu diesem Zweck gelenkig befestigt. Fig. 5a zeigt die Betriebsstellung, in der der Trägerrahmen zum Aufnehmen des Wechselaufbaues 9 angehoben ist, Fig. 5b zeigt die Betriebsposition, in der der Wechselaufbau mit dem Trägerrahmen 9 auf den Fahrzeugrahmen abgesenkt ist, wobei in dieser Position die Längsträger des Trägerrahmens 10 mit den Hinterstreben 14 in einer geraden Linie gestreckt sind und das Gewicht des Wechselaufbaues verhindert, daß bei einem Kippen um die hintere Kipplagerung 36 (bei gleichzeitig gelöster vorderer Kipplagerung 30) diese geradlinige Verbindung zwischen Längsträgern und Hinterstreben aufgehoben wird. Wenn somit durch den Hubzylinder der Trägerrahmen mit dem Wechselaufbau angehoben wird (Darstellung Fig. 5c), wird der Gesamtaufbau um die hintere Kipplagerung 36 gekippt, ohne daß weitere Vorkehrungen getroffen werden müssen. Für den Fall, daß der Wechselaufbau 9 sich nicht über den oberen Gelenkpunkt der Hinterstrebe 14 erstreckt, ist es erforderlich, Längsträger 10 und Hinterstrebe 14 in gestrecktem Zustand zu versteifen, indem die gemeinsame Gelenkstelle unwirksam, d. h. starr gemacht wird. Bei der in den Darstellungen 1 bis 5 einschließlich dargestellten Ausführungsform der Erfindung stellen die Längsträger der Wechselbrücke jedoch die für das Kippen des Aufbaues erforderlichen Versteifungen dar, so daß beim Übergang von Anheben der Wechselbrücke auf Kippen bei abgesenktem Aufbau lediglich ein Lösen der vorderen Gelenkstellen erforderlich ist, um durch Ausfahren der Hubeinrichtung den Kippvorgang einzuleiten.

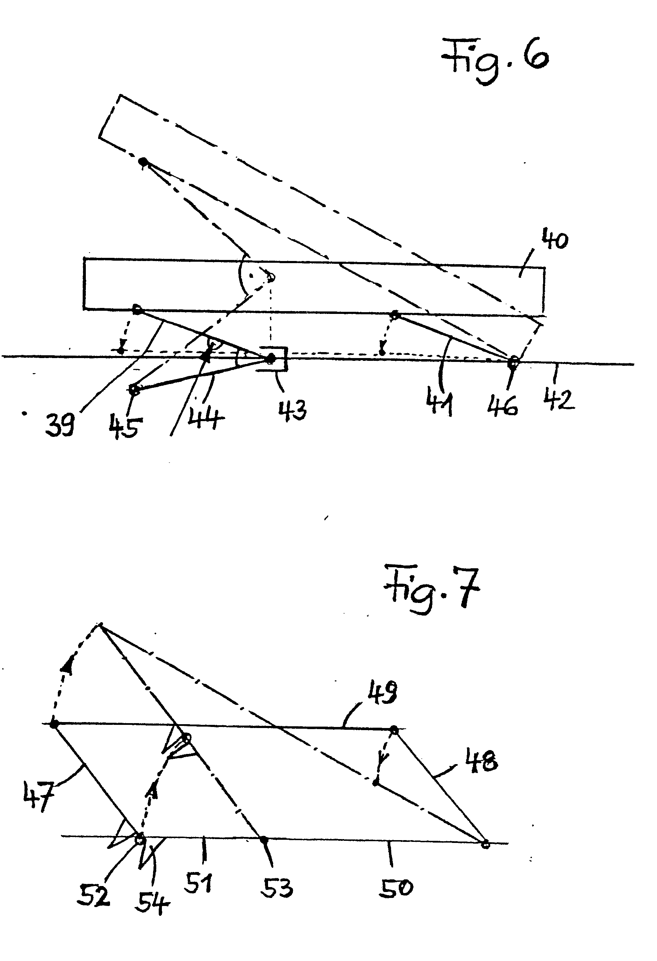

Bei der Ausführungsform nach Fig. 6 ist die Vorderstrebe 39 zum waagerechten Anheben der Wechselbrücke 40 ähnlich wie bei der vorstehend detailliert beschriebenen Ausführungsform ausgebildet. Es wird auch hier ein Parallelogramm aus Vorderstreben 39, Wechselbrücke 40 bzw. diese aufnehmenden Trägerrahmen, Hinterstrebe 41 und Hilfsrahmen 42 gebildet. Zum Kippen der Wechselbrücke 40 wird die Gelenkverbindung 43, die auf dem Hilfsrahmen 42 festgelegt ist, aus dieser Festlegung gelöst und beweglich gemacht. Die Gelenkverbindung 43 steht über einen Kipphebel 44 mit einem Gelenkpunkt 45 in Verbindung, der am Hilfsrahmen 42 festgelegt ist und die Hubeinrichtung verschiebt bei Betätigung das Gestänge 44-39 um die hintere Gelenkachse 46 oder eine gesonderte Kippachse scherengitterartig nach oben, so daß der Behälter einwandfrei kippt.

Die Ausführungsform nach Fig. 7 sieht ebenfalls eine Parallelogrammführung in der vorstehend angegebenen Weise vor; das Parallelogramm besteht aus Vorderstrebe 47, Hinterstrebe 48, Trägerrahmen 49 und Hilfsrahmen 50. Mit der Vorderstrebe 47 ist ein Gelenkarm 51 verbunden, dessen eines Ende am Gelenk 52 der Vorderstrebe 47 und dessen anderes Ende an der Stelle 53 am Hilfsrahmen angelenkt ist. Die Gelenkachse 52 wird zum Anheben und Senken des Wechselaufbaues und für den gesamten Betrieb mit Ausnahme des Kippens auf dem Hilfsrahmen 50 festgelegt. Zum Kippen wird die Gelenkachse 52 freigegeben, so daß Vorderstrebe 47 und Gelenkarm 51 um die Gelenkachse 53 angehoben und um den gewünschten Kippwinkel gedreht werden. An der Gelenkachse 52 ist eine Schere 54 vorgesehen, die in angehobenem bzw. gestrecktem Zustand von Vorderstrebe und Gelenkarm schließt, und damit die geradlinige Verbindung Vorderstrebe-Gelenkarm versteift.

**Patentansprüche**

1. Einrichtung zum Wechseln und Kippen von Aufbauten für Nutzfahrzeuge, mit einem Trägerrahmen (10) zur Aufnahme einer Wechselbrücke (9), mindestens einer zwischen Trägerrahmen und Fahrzeugrahmen (4) angreifenden Hubeinrichtung (15), einer zwischen Trägerrahmen und Fahrzeugrahmen eingeschalteten Strebenführung (13, 14) und mit einer Verriegelung (34, 35) zwischen Wechselbrücke und Fahrzeugrahmen, dadurch gekennzeichnet, daß Vorderstrebe (13) und Hinterstrebe (14) der Strebenführung (13, 14) jeweils gelenkig am Trägerrahmen (10) und am Fahrzeugrahmen (4) befestigt sind, derart, daß die Strebenführung (13, 14) mit dem Trägerrahmen (10) und der Wechselbrücke (9) beim Anheben bzw. Absenken der Wechselbrücke parallelogrammartig geführt ist bzw. die Wechselbrücke ihre parallele Lage zum Fahrzeugrahmen beibehält, und daß zum Kippen des Wechselaufbaues (9, 10) die Hinterstrebe (14) in einer Ebene mit dem Trägerrahmen (10) so festlegbar ist, daß Trägerrahmen (10) und Hinterstrebe (14) zu einem starren Träger verbunden sind, und ein Anlenkpunkt (25, 43) der Vorderstrebe (13) vom Trägerrahmen (10) bzw. vom Fahrzeugrahmen (4) lösbar ausgebildet ist, derart, daß der Trägerrahmen (10) mit der Wechselbrücke (9) um eine hintere Kipplagerung (30, 46) schwenkbar ist.

2. Einrichtung nach Anspruch 1, dadurch gekennzeichnet, daß die Hubeinrichtung (15) ein vom Fahrerhaus (2) aus steuerbarer Hydraulik-Teleskop-Zylinder ist.

3. Einrichtung nach Anspruch 1, dadurch gekennzeichnet, daß die Vorderstreben (13) und die Hinterstreben (14) bei aufgesetztem und abgesenktem Wechselaufbau (9, 10) horizontal im Hilfsrahmen (6) verstaut sind.

4. Einrichtung nach Anspruch 1, dadurch gekennzeichnet, daß der Trägerrahmen (10) horizontal liegende Hub- und Führungsräder (18, 20) aufweist, die in den U-Profilen der Längsträger (33) der Wechselbrücke (9) geführt sind.

5. Einrichtung nach Anspruch 1, dadurch gekennzeichnet, daß die Kipplagerung (30) gleichzeitig die Kippachse für den Wechselaufbau (9, 10) und die Schwenkachse für die Hinterstrebe (14) bildet.

6. Einrichtung nach Anspruch 1, dadurch gekennzeichnet, daß die Kippachse für den Wechselaufbau (9, 10) parallel und im Abstand zur Achse der Kipplagerung (30) angeordnet ist.

7. Einrichtung nach einem der Ansprüche 1—6, dadurch gekennzeichnet, daß die Vorderstrebe (13) mit ihrem oberen Ende (25) in Eingriff mit dem Trägerrahmen (10) steht, und daß im Trägerrahmen (10) ein Sperrglied (28) vorgesehen ist, in das das Ende (25) zum waagerechten Heben und Senken des Wechselaufbaues einrastet bzw. aus dem das Ende (25) zum Kippen des Wechselaufbaues ausrastet.

8. Einrichtung nach einem der Ansprüche 1—7, dadurch gekennzeichnet, daß die Wechselbrücke (9) Wechselbrückeneinführungen (34, 35) aufweist, die mit den Kipplagerungen (30, 36) zusammenwirken.

## Claims

1. System for changing and tilting resp. dumping superstructures for commercial transport vehicles, comprising a support frame (10) for taking up a changeable platform (9), at least one lift mechanism (15) between the support frame (10) and the vehicle frame (4), a strut quide (13, 14) between the support frame and the vehicle frame, and locking means (34, 35) between the changeable platform and the vehicle frame, characterised in that the front strut (13) and the rear strut (14) of the strut guide (13, 14) each is pivotally mounted to the support frame (10) and to the vehicle frame (4) in such a manner that the strut guide (13, 14) together with the support frame (10) and the changeable platform (9) is guided in a parallelogram or a trapezoid when lifting and lowering the changeable platform or alternatively the changeable platform is maintained in its parallel position to the vehicle frame, and that for tilting resp. dumping the changeable superstructure (9, 10) the rear strut is positionable in the same plane as the support frame (10), that support frame (10) and rear strut (14) are combined to a rigid support, and that a pivot point (253, 43) of the front strut (13) is arranged releasable from the support frame (10) resp. from the vehicle frame (4) in such a manner that the support frame (10) can be pivoted together with the changeable frame (9) around a rear pivot bearing (30, 46).

2. System according to claim 1, characterised in that the lifting mechanism (15) is provided as at least one hydraulic telescoping cylinder controllable from the cab (2).

3. System according to claim 1, characterised in that the front struts (13) and the rear struts (14) are stowed within the auxiliary frame (6) in a horizontal manner if the changeable superstructure (9, 10) is deposited and lowered.

4. System according to claim 1, characterised in that the support frame (10) is provided with horizontally arranged lift and guide wheels (18, 20), which are guided within U-profiles of the longitudinal beams (33) of the changeable platform.

5. System according to claim 1, characterized in that pivot bearing (30) is the tilting axis for the changeable superstructure (9, 10) as well the pivot axis for the rear strut (14).

6. System according to claim 1, characterised in that the tilting axis for the changeable superstructure (9, 10) is arranged parallel to and distant from the axis of the pivot bearing (30).

7. System according to claim 1—6, characterised in that the front strut (13) with its upper end (25) engages the support frame (10), and the support frame (10) is provided with a locking member (28), in which the end (25) for horizontally lifting and lowering the changeable superstructure is engaged or is disengaged from the end (25) for tilting the changeable superstructure.

8. System according to claims 1—7, characterised in that the changeable platform (9) is provided with guides (34, 35) for the changeable superstructure, which cooperate with the pivot bearings (30, 46).

## Revendications

1. Dispositif échangeur-basculeur pour la superstructure d'un véhicule utilitaire, comportant au moins un châssis porteur (10) adapté à recevoir un pont échangeur (9), au moins un système de soulèvement (15) monté entre le châssis porteur (10) et le châssis normal (4) du véhicule, un système de jambes de guidage (13, 14) montées entre le châssis porteur et le châssis du véhicule, et un système de verrouillage (34, 35) entre le pont échangeur et le châssis du véhicule, caractérisé en ce que la jambe avant (13) et la jambe arrière (14) du système de jambes de guidage (13, 14) sont fixées chacune par des articulations au châssis porteur (10) et au châssis du véhicule (4), de telle manière que le système de jambes de guidage (13, 14) coopère avec le châssis porteur (10) et avec le pont échangeur (9), pour constituer un parallélogramme déformable suivant les mouvements de soulèvement et d'abaissement du pont échangeur, celui-ci restant ainsi parallèle au châssis du véhicule; en ce que la jambe arrière (14) peut être verrouillée dans le plan du châssis porteur (10), en constituant avec celui-ci une structure porteuse rigide, pour permettre le basculement de l'ensemble de la superstructure à échangeur (9, 10); et en ce qu'un point d'articulation (25, 43) de la jambe avant (13) sur le châssis porteur (10) ou sur le châssis du véhicule (4) est réalisé de manière séparable, pour permettre le pivotement de l'ensemble du châssis porteur (10) et du pont échangeur (9) autour d'un axe de basculement arrière (30, 46).

2. Dispositif conforme à la revendication 1, caractérisé en ce que le système de soulèvement (15) comporte un vérin hydraulique télescopique, commandé à partir de la cabine de conduite (2) du véhicule.

3. Dispositif conforme à la revendication 1, caractérisé en ce que les jambes avant (13) et les jambes arrière (14) viennent se loger à l'horizontale dans un châssis auxiliaire (6), lorsque la superstructure à échangeur (9, 10) repose en position d'abaissement sur ce même châssis auxiliaire.

4. Dispositif conforme à la revendication 1, caractérisé en ce que le châssis porteur (10) est pourvu de roues de soutien et de guidage (18, 20) disposées horizontalement et guidées dans des longerons profilés en U (33) du pont échangeur (9).

5. Dispositif conforme à la revendication 1, caractérisé en ce que l'articulation de basculement (30) constitue en même temps l'axe de basculement de la superstructure à échangeur (9, 10) et l'axe de pivotement de la jambe arrière (14).

6. Dispositif conforme à la revendication 1, caractérisé en ce que l'axe de basculement de la superstructure à échangeur (9, 10) est parallèle à l'axe de l'articulation de basculement (30), et écarté de cet axe.

7. Dispositif conforme à l'une des revendications 1 à 6, caractérisé en ce que la jambe avant (13) est reliée au châssis porteur (10) par son extrémité supérieure (25); le châssis porteur (10) étant pourvu d'un organe de retenue (28), dans lequel peut s'engager l'extrémité (25), pour les manoeuvres de soulèvement et d'abaissement de la superstructure à échangeur; l'extrémité (25) pouvant aussi être dégagée hors de l'organe de retenue (28), pour permettre le basculement de la superstructure à échangeur.

8. Dispositif conforme à l'une des revendications 1 à 7, caractérisé en ce que le pont échangeur (9) est pourvu d'organes d'engagement et de guidage (34, 35), qui coopèrent avec les articulations de basculement (30,36).

Fig.1

0 045 398

*Fig.2*

9

38 35 31 21 33 34 32

0 045 398

Fig. 3

0 045 398

Fig. 4

# Fig. 5

a)

b)

c)

Fig. 6

Fig. 7